# EUROPEAN PATENT APPLICATION

(11) **EP 2 533 599 A1**
(43) Date of publication of application: **12.12.2012**
(21) Application number: 11305703.8
(22) Date of filing: 07.06.2011
(51) Int. Cl.: H04W 84/00, H04W 88/04

(54) **A mobility concept for a mobile relay station transceiver**

(71) Applicant: Alcatel Lucent, 75007 Paris (FR)
(72) Inventor: Klein, Siegfried, 70469 Stuttgart (DE); Doetsch, Uwe, 74392 Freudental (DE); Bakker, Hajo, 71735 Eberdingen (DE); Weber, Andreas, 74251 Lehrensteinsfeld (DE)
(74) Representative: 2SPL Patentanwälte

(57) **Abstract**

A concept for a mobile relay station transceiver (100), a mobility management entity (200) and base station transceiver (300; 301; 302) in a mobile communication system (500), the mobile communication system (500) comprising a mobile transceiver (400), the mobile transceiver (400) being located in the coverage area of the mobile relay station transceiver (100) and associated with the mobile relay station transceiver (100) while being in an idle mode, the idle mode being a state in which data transmission is inactive, the apparatus (10) being adapted for performing mobility related signaling towards the mobile communication system (500) communicating with the plurality of base station transceivers (300; 301; 302), and for generating a static network environment for the mobile transceiver (400) while the mobile transceiver (400) is associated to the mobile relay station transceiver (100).

## Description

Embodiments of the present invention relate to mobile communication networks, more particularly but not exclusively to mobility management in mobile relaying networks.

### Background

Demands for higher data rates for mobile services are steadily increasing. At the same time modern mobile communication systems as 3rd generation systems (3G as abbreviation) and 4th generation systems (4G as abbreviation) provide enhanced technologies which enable higher spectral efficiencies and allow for higher data rates and cell capacities. As operators are seeking to extend the coverage of their networks, relaying concepts become more and more sophisticated.

In 3GPP (as abbreviation for 3rd Generation Partnership Project) as international standardization body, relay architectures for E-UTRA (as abbreviation for Evolved-UMTS Terrestrial Radio Access, wherein UMTS abbreviates Universal Mobile Telecommunication System) have been discussed and results collected in TR (as abbreviation for Technical Recommendation) 36.806. These new architectures are likely to be established in future LTE-A (as abbreviation for Long Term Evolution-Advanced) networks.

In relaying architectures a relay station transceiver may extend the coverage of a base station transceiver. Basic concepts use a relay station transceiver, which receives signals from a base station transceiver and forwards them to mobile transceivers, and vice versa, in an amplify-and-forward fashion. The radio signals from the base station transceiver are received, amplified and transmitted to the mobile transceiver, from the relay station transceiver respectively. In such a scenario the relay station may not even be identified as such by a mobile transceiver. In other concepts, the relay station transceiver may correspond to a base station transceiver, which is connected to another base station transceiver, the so-called donor base station transceiver, via a radio interface and provides radio services as a base station to the mobile transceiver station.

### Summary

Embodiments can be based on the finding that a relay station transceiver can be used in a similar fashion as a mobile base station, therewith reducing the signaling in a mobile communication system. It is one finding of embodiments, that large signaling overheads are created by mobile transceivers which are located in a common mobile environment, like a train, bus or car, although they are idle, i.e. although they are inactive with respect to data transmissions.

For example, in a bus or train environment, a plurality of mobile transceivers may share similar mobility properties. A mobile relay station transceiver installed in the same mobile environment and therewith also sharing the similar mobility properties may service the plurality of mobile transceivers in the mobile environment, thereby creating a static network environment for the mobile transceivers. From the network point of view, the mobile relay station transceiver may still provide a capacity extension, i.e. the base station transceivers of the mobile communication system may treat the mobile relay station transceiver as a mobile transceiver in terms of mobility. In other words, the mobile relay station may communicate with the mobile communication network in terms of mobility signaling, as e.g. hand over and paging.

For example, in said train scenario the mobile relay station transceiver may be handed over from one base station transceiver of the mobile communication network to the next along with the train passing through the network. For mobile transceivers registered or associated with the mobile relay station in the train, no mobility signaling between the mobile transceivers and the mobile communication network is necessary. The mobile transceivers experience a static network scenario created by the mobile relay station moving along with them.

Embodiments can be based on the finding, that a reduced amount of tracking area updates in the case the mobile relay station transceiver enters a new tracking area can be achieved, when all UEs (as abbreviation for User Equipments according to the 3GPP terminology) are "hidden" towards the network within a virtual tracking area. Especially in the case when many UEs are connected to a bus or tram or train, a lot of tracking area updates can be avoided. Based on the concept that each mobile relay also has a mobile transceiver or UE functionality this can be achieved with pointer functionality within a MME (as abbreviation for Mobility Management Entity) in the network. Only the mobile relay station transceiver may send out a tracking area update, all mobile transceivers served by the mobile relay station transceiver are mapped to the mobile relay station transceiver.

Embodiments provide an apparatus for a mobile relay station transceiver in a mobile communication system, i.e. embodiments may provide said apparatus to be operated by or included in a mobile relay station transceiver. In the following, the apparatus will also be referred to as mobile relay station transceiver apparatus. Embodiments may also provide a mobile relay station transceiver comprising the mobile relay station transceiver apparatus.

The terms "mobile communication system" and "mobile communication network" will be used synonymously. The mobile relay station transceiver has a coverage area, in which a mobile transceiver can be located. The mobile communication system comprises a plurality of base station transceivers and a mobile transceiver. The mobile transceiver is associated with the mobile relay station transceiver while being in an idle mode, the idle mode being a state in which data transmission is inactive. In other words, and also generally, two basic states may be distinguished for mobile transceivers being adapted for communicating in a mobile communication network. The first state, the so-called idle state, is a state in which the mobile has no active connections or data sessions with the network. In other words, there is no active data exchange between the mobile transceiver and the network. Even though no data is exchanged, the mobile transceiver is still registered with the network, enabling the network to query the mobile transceiver if a call or a data session is requested to be established with the mobile transceiver. In such a situation a mobility management entity (MME) in the network may query the mobile transceiver, the procedure of which is also referred to as "paging", which be explained in more detail subsequently.

In embodiments the apparatus for the mobile relay station transceiver is adapted for performing mobility related signaling towards the mobile communication network communicating with the plurality of base station transceivers, and the mobile relay station is adapted for generating a static network environment for the mobile transceiver while the mobile transceiver is associated to the mobile relay station transceiver.

Embodiments can provide the advantage that a signaling overhead can be reduced by the usage of a mobile relay station transceiver and providing a static network environment for mobile transceivers, i.e. a network environment, which moves along with the mobile transceivers, while mobility related signaling towards the fixed mobile communication system is carried out by said mobile relay station transceiver.

A simple scenario to explain the paging procedure can be imagined, when the mobile transceiver has just ended an active data transmission so the MME would know in which cell the mobile transceiver is located. In the following a cell is referred to as an area, for which a base station transceiver provides radio services, in which no mobility signaling is carried out since mobile transceivers can be served by the same base station transceiver. A base station transceiver may operate multiple cells or sectors. So, if the MME knows the mobile transceiver's serving base station transceiver or cell or sector, the mobile transceiver can be paged in this area using specific paging channels all registered mobile transceivers are listening to and, upon a response of the mobile transceiver, a radio link can be established.

If the mobile transceiver has been inactive for a while, it may move in the network. As notification on every cell change would create an uneconomic signaling overhead in the network, the exact position of the mobile transceiver becomes unknown to the MME. The MME could still guess the position of the mobile transceiver, however, the uncertainty grows the longer the mobile transceiver has been inactive. Therefore so-called location or tracking areas are defined. A location area can be defined as a group of one or more base station transceivers or cells in which a mobile transceiver may move without updating its location towards the network. The base station transceivers of the network may indicate the location area they belong to using broadcast channels. A mobile transceiver moving through the network may then determine the location area a base station receiver is assigned to by reading the respective broadcast channels. Upon determining a change in the location area a mobile transceiver performs a so-called location update procedure and the MME will then register the mobile transceiver for the respective new location area.

Hence, the signaling which is necessary to track a mobile transceiver through the network depends on the size, i.e. the number of cells or base station transceivers, of a location area and the mobility of the mobile transceivers. Coming back to the exemplary scenario of a train moving through the network quite fast and a potentially high number of mobile transceivers along with it, it can easily be seen that a high signaling will occur. It is to be noted that in some mobile communication systems hierarchical administrative groups of cells or base station transceivers may be defined. These may also referred to as routing areas, location areas, tracking areas, etc. In such networks, the activity of a mobile may be taken into account for the location updates. In other words, if a mobile is very active it may update its location more often, i.e. on each boundary of a rather small location area of the lowest level of the hierarchy. The location of the mobile transceiver is then known by the network on the granularity of the small location areas of the lowest level of the hierarchy. The next higher level of the hierarchy may define large location areas, which are larger in size than the small location areas of the lowest level of the hierarchy. A rather inactive mobile transceiver may then be configured to only update its location on the boundaries of the large location areas. Therewith the signaling for the inactive mobile transceiver can be reduced, however at the price of having knowledge of the mobile transceiver's location only to the granularity of the large location areas. If the mobile transceiver has to be paged, e.g. due to an incoming call, it has to be queried in a larger area involving more base station transceivers and thus involving a higher signaling overhead for the paging and the respective paging channels in the higher number of cells or base station transceivers. Thus, the configuration of a mobile transceiver may be a tradeoff between the signaling overhead generated by the mobile transceivers through the location area updates and signaling overhead for paging.

Thus, in embodiments the mobile communication system may comprise a first base station transceiver, a second base station transceiver, and a mobility management entity. The first and the second base station transceivers have adjacent coverage areas and the first base station transceiver belongs to a first location area and the second base station transceiver belongs to a second location area. A location area is an administrative group of one or more base station transceivers to which a mobile transceiver is registered when switched on and in which a mobile transceiver in idle mode is queried by the mobility management entity when a first radio link for data communication with the mobile transceiver is to be established. The apparatus may comprise first means for communicating with the first and second base station transceivers and the mobility management entity. The first means may be implemented by using one or more wireless interfaces with predefined protocols.

The apparatus may further comprise means for registering with the mobility management entity for the first or the second location area and for changing the registration from the first location area to the second location area when the mobile relay station transceiver moves from the coverage area of the first base station transceiver to the coverage area of the second base station transceiver using the first means for communicating. The apparatus may further comprise second means for communicating with the mobile transceiver. The second means can, for example, be implemented as any wireless interface. The apparatus can comprise means for establishing a virtual location area for the mobile transceiver to register with using the second means for communicating. The virtual location area can, for example, be identified on the respective broadcast channels provided by the mobile relay station transceiver. In embodiments the first and second means for communicating can be realized as different wireless interfaces, i.e. using different wireless access technologies. A mobile transceiver registered with the virtual location area may then be paged and communicated with using a different wireless technology than the relay station transceiver uses towards the mobile communication network.

In other words, the virtual location area may be a mobile location area which moves along with the relay station transceiver apparatus. From the network perspective the virtual location area is mobile; from the mobile transceiver's perspective the virtual location area is static. Therewith, a mobile transceiver registered to the virtual location area may not carry out location area updates towards the fixed network in which it is moving along together with the mobile relay station transceiver and the related virtual location area. Although embodiments described herein mainly refer to one mobile relay station transceiver, other embodiments may comprise a plurality of mobile relay station transceivers, e.g. multiple cells in a train, which may be installed to establish one or more virtual location areas.

In embodiments the means for registering can be further adapted for generating an indication for the mobility management entity when a mobile transceiver initially registers with the virtual location area. In other words, the MME may then have knowledge that the mobile transceiver can be found in the virtual location area. As will be detailed subsequently, the MME then only has to track the actual location area of the mobile relay station transceiver in order first find the mobile relay station transceiver and subsequently find the queried mobile transceiver. Thus, the indication may comprise information on the virtual location area of the relay station transceiver and information on an identification of the mobile transceiver.

In embodiments the means for establishing the virtual location area can be adapted to be registered for a plurality of mobile transceivers, i.e. a plurality of mobile transceivers may then be found by the MME by tracking the location area of the mobile relay station transceiver. Therewith, location update signaling of a single mobile relay station may be enough to track the plurality of mobile transceivers being attached to or associated with the (mobile) relay station transceiver.

Furthermore, in embodiments the means for registering can be further adapted for generating an indication for the mobility management entity when none of the mobile transceivers registered for the virtual location area has an active data transmission. In other words, while any mobile transceiver has an active data link relayed by the mobile relay station transceiver the exact, i.e. on cell or base station transceiver granularity, location of the relay station transceiver is known to the MME and any mobile transceiver registered with the virtual location area can easily be found. If none of the mobile transceivers has an active data link, then also the mobile relay station transceiver may be switched into an idle mode. Its location may then be tracked on location area granularity through location updates carried out by the mobile relay station transceiver, just like a regular mobile transceiver. In this situation, if a mobile transceiver registered with the virtual location area is queried, the mobile relay station transceiver may be paged first and the location of the virtual location area is determined. The said mobile transceiver may then be further paged within the virtual location area.

In further embodiments the apparatus may further comprise means for setting up a radio link with the mobile transceiver for active data transmission using the second means for communicating. It may comprise means for linking with the first or second base station transceiver. The mobile relay station transceiver can be adapted for changing the linking from the first base station transceiver to the second base station transceiver, when moving from the coverage area of the first base station transceiver to the coverage area of the second base station transceiver using the first means for communicating. In other words, the apparatus may carry out handovers in the mobile communication system by linking with the respective base station transceivers. The apparatus may further comprise means for relaying information received from the first base station transceiver to the mobile transceiver and from the mobile transceiver to the first base station transceiver when linked with the first base station transceiver. The means may further relay information received from the second base station transceiver to the mobile transceiver and from the mobile transceiver to the second base station transceiver when linked with the second base station transceiver. The apparatus may comprise means for controlling the second means for communicating such that a change of the linking from the first base station transceiver to the second base station transceiver is transparent to the mobile transceiver. In other words, the handovers carried out by the mobile relay station transceiver apparatus among base station transceivers of the mobile communication system may not affect a mobile transceiver linked with the relay station transceiver.

Moreover, embodiments may further comprise means for storing data provided by the mobile transceiver during the change of the link from the first base station transceiver to the second base station transceiver. In other words, embodiments may prevent data loss during handover of the mobile relay station by storing or buffering intermediate data transmissions from the mobile transceiver.

Embodiments may also provide an apparatus for a mobility management entity in a mobile communication system, i.e. embodiments may provide said apparatus to be operated by or included in a mobility management entity. In the following, the apparatus will also be referred to as mobility management entity apparatus. Embodiments may also provide a mobility management entity comprising the mobility management entity apparatus. The mobile communication system comprises a plurality of base station transceivers, a mobile relay station transceiver and a mobile transceiver. The plurality of base station transceivers is organized in a plurality of location areas, a location area being an administrative group of one or more base station transceivers to which a mobile transceiver is registered when switched on and in which a mobile transceiver is queried by the mobility management entity of the mobile communication system when a first radio link for data transmission to the mobile transceiver is to be established. The mobility management entity apparatus comprises means for storing information on a location area the mobile relay station transceiver is registered with for the mobile relay station transceiver, and for storing information on the registration with the mobile relay station transceiver for the mobile transceiver. In other words, the means for storing may store an identification of the mobile transceiver and information on the virtual location area established by the mobile relay station transceiver. The mobility management entity apparatus can be further adapted for paging a mobile transceiver by paging the mobile relay station transceiver and subsequently paging the mobile transceiver.

Furthermore, embodiments may provide an apparatus for a base station transceiver in a mobile communication system, i.e. embodiments may provide said apparatus to be operated by or included in a base station transceiver. In the following, the apparatus will also be referred to as base station transceiver apparatus. Embodiments may also provide a base station transceiver comprising the base station transceiver apparatus. The mobile communication system comprises a mobile relay station transceiver being associated with the base station transceiver. The base station transceiver apparatus comprises means for switching the mobile relay station transceiver between an active mode, in which a data transmission between the base station transceiver and the mobile relay station transceiver is active, and an idle mode, in which data transmission between the base station transceiver and the mobile relay station transceiver is inactive. The base station transceiver apparatus further comprises means for determining whether an active data transmission exists between the mobile relay station transceiver and a mobile transceiver. The means for switching is further adapted for switching the mobile relay station transceiver into the idle mode when it is determined that no active data transmission exists between the mobile relay station transceiver and a mobile transceiver. In other words, the base station transceiver apparatus may determine when all mobile transceivers serviced by the mobile relay station transceiver are in idle mode and may then switch the mobile relay station transceiver to idle mode as well.

In embodiments the means for determining can be adapted for determining the active transmissions by monitoring signaling transmissions between the mobile relay station transceiver and a mobility management entity in the mobile communication system. In further embodiments the means for determining may be adapted for receiving an indication from the mobile relay station transceiver when no active data transmission exists between the mobile relay station transceiver and a mobile transceiver. In other words, in some embodiments the relay station transceiver may be switched to idle mode when the base station transceiver apparatus detects, e.g. by eavesdropping the signaling forwarded to and received by the mobile relay station transceiver, that all mobile transceivers associated with the mobile relay station transceiver are in idle mode. In some embodiments the relay station transceiver may be switched to idle mode when the base station transceiver apparatus receives a corresponding indication from the mobile relay station transceiver.

In further embodiments, the base station transceiver apparatus can be further adapted for communicating with a data gateway, for forwarding data received from the mobile relay station transceiver to the data gateway, and for forwarding data received from the data gateway for the mobile transceiver to the mobile relay station transceiver. The base station transceiver apparatus can further comprise means for storing data received from the data gateway for the mobile transceiver during the change of an association of the mobile relay station transceiver from the base station transceiver to another base station transceiver. I.e. the base station transceiver apparatus may prevent packet loss by storing or buffering intermediate data during handover. The base station transceiver apparatus can be further adapted for receiving an indication on an accepted change of the association from the other base station transceiver, and the base station transceiver can be further adapted for forwarding the stored data to the other base station transceiver after the indication on the accepted change of the association was received. I.e. the intermediately stored data can be forwarded to the other base station transceiver once the handover has been acknowledged.

In line with the above, any mobility related signaling may be buffered during handover. In embodiments, the base station transceiver apparatus can be further adapted for communicating with a mobility management entity for forwarding signaling data received from the mobility management entity for the mobile transceiver to the relay station transceiver and for forwarding signaling data received from the relay station transceiver to the mobility management entity. The base station transceiver apparatus can be further adapted for storing signaling data received from the mobility management entity for the mobile transceiver during the change of an association of the relay station transceiver from the base station transceiver to another base station transceiver. The base station transceiver apparatus can be further adapted for receiving an indication on an accepted change of the association from the other base station transceiver and the base station transceiver apparatus can be further adapted for forwarding the stored signaling data to the other base station transceiver after the indication on the accepted change of the association was received.

The base station transceiver apparatus can be further adapted for receiving an indication on a change of an association of another relay station transceiver from another base station transceiver to the base station transceiver. The base station transceiver apparatus can be further adapted for generating an indication on an accepted change of the association and for forwarding information on the indication to the other base station transceiver. It can be even further adapted for generating an indication on a new association for a mobility management entity and for forwarding information on the indication on the new association to the mobility management entity.

Embodiments may further provide a mobile communication system with the above-described mobile relay station transceiver, the above-described mobility management entity, and/or the above-described base station transceiver.

Embodiments may also provide a method for a mobile relay station transceiver in a mobile communication system. The mobile relay station transceiver has a coverage area, the mobile communication system comprises a plurality of base station transceivers and a mobile transceiver. The mobile transceiver is located in the coverage area of the mobile relay station transceiver and it is associated with the mobile relay station transceiver while being in an idle mode, the idle mode being a state in which data transmission is inactive. The method comprises the steps of performing mobility related signaling towards the mobile communication system communicating with the plurality of base station transceivers, and generating a static network environment for the mobile transceiver while the mobile transceiver is moving along with and, hence, is associated with the mobile relay station transceiver.

Embodiments may also provide a method for a mobility management entity in a mobile communication system. The mobile communication system comprises a plurality of base station transceivers, a mobile relay station transceiver and a mobile transceiver. The plurality of base station transceivers is organized in a plurality of location areas, a location area being an administrative group of one or more base station transceivers to which a mobile transceiver is registered when switched on, and in which a mobile transceiver is queried by the mobility management entity of the mobile communication system when a first radio link for data transmission to the mobile transceiver is to be established. The method comprises the steps of storing information on a location area the mobile relay station transceiver is registered with for the mobile relay station transceiver and storing information on the registration with the mobile relay station transceiver for the mobile transceiver.

Embodiments may also provide a method for a base station transceiver in a mobile communication system. The mobile communication system comprises a mobile relay station transceiver being associated with the base station transceiver. The method comprises a step of switching the mobile relay station transceiver between an active mode, in which a data transmission between the base station transceiver and the mobile relay station transceiver is active, and an idle mode, in which data transmission between the base station transceiver and the mobile relay station transceiver is inactive. The method further comprises determining whether an active data transmission exists between the mobile relay station transceiver and one or more mobile transceivers and switching the mobile relay station transceiver into the idle mode when it is determined that no active data transmission exists between the mobile relay station transceiver and a mobile transceiver.

Embodiments can further comprise a computer program having a program code for performing one of the above described methods when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Figure 1 shows a mobile communication system with embodiments;
Figure 2 depicts a block diagram of an embodiment of an apparatus for a mobile relay station transceiver;
Figure 3 depicts a block diagram of an embodiment of an apparatus for a mobility management entity;
Figure 4 depicts a block diagram of an embodiment of an apparatus for a base station transceiver;
Figure 5 shows a flow chart of an embodiment of a method for a mobile relay station transceiver;
Figure 6 shows a flow chart of an embodiment of a method for a mobility management entity; and
Figure 7 shows a flow chart of an embodiment of a method for a base station transceiver.

### Description of some Embodiments

It is to be noted that optional blocks in the Figures are given in dotted lines.

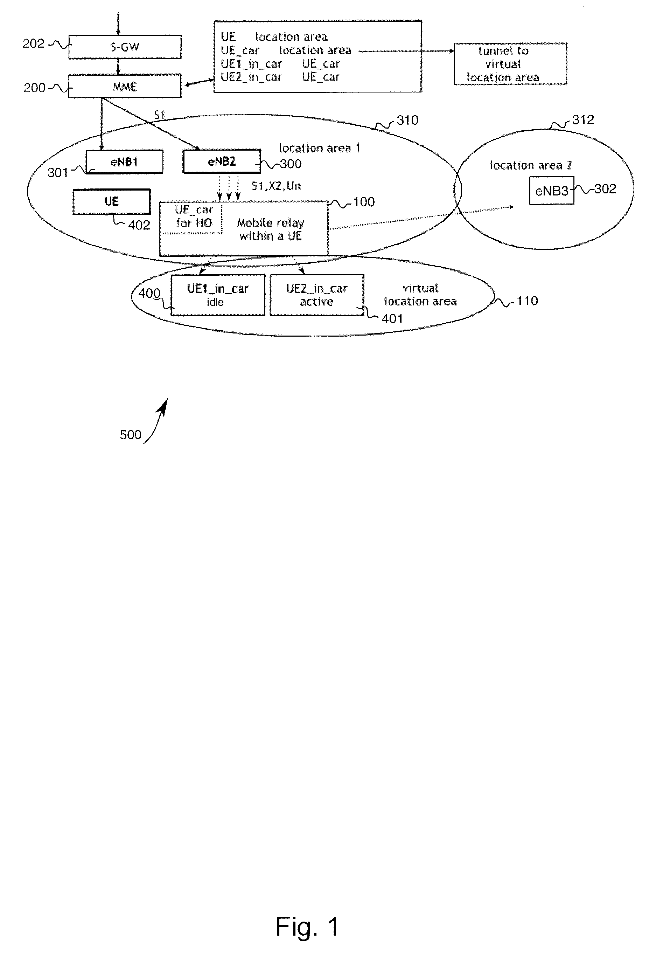

Figure 1 illustrates a mobile communication network or system 500. The mobile communication system 500 may, for example, correspond to an LTE, an LTE-A, a UTRAN (as abbreviation for UTRA Network), a E-UTRAN, a GERAN (as abbreviation for GSM/EDGE Radio Access Network, GSM abbreviating Global System for Mobile Communication, EDGE abbreviating Enhanced Data Rates for GSM Evolution), or generally an OFDMA (as abbreviation for Orthogonal Frequency Division Multiple Access) network. In the following embodiment an LTE network, i.e. an E-UTRAN will be assumed as mobile communication system 500.

The network illustrated in Figure 1 comprises a mobile relay station transceiver 100 establishing a virtual location area 110, which may correspond to the (geographical) coverage area of the mobile relay station transceiver 100. In the virtual location area 110 two mobile transceivers 400 and 401 are exemplarily shown. The mobile transceivers 400 and 401 may also be referred to as UE (as abbreviation for User Equipment), respectively, in line with the 3GPP terminology. Moreover, in the scenario depicted in Figure 1 it is exemplarily assumed that the two mobile transceivers 400, 401 and the mobile relay station transceiver 100 are located within a car. Therefore the mobile transceiver 400 is labeled as "UE1_in_car" and the mobile transceiver 401 is labeled "UE2_in_car". Furthermore, the mobile relay station transceiver 100 has some mobile transceiver functionality towards the mobile communication network 500, i.e. towards the base station transceivers 300 and 301, which are also comprised in the mobile communication system 500. Therefore the mobile relay station transceiver 100 is also labeled as "UE_car" in Figure 1.

As Figure 1 further illustrates base station transceivers 300, 301, 302 are also labeled as "eNB1", "eNB2" and "eNB3" (as abbreviation for evolved NodeB in line with the 3GPP terminology). Moreover, it can be seen that the two base station transceivers 300, 301 are located in a first location area 310 and the mobile communication system comprises a second location area 312 with another base station transceiver 302. Another mobile transceiver 402 is also located in the first location area 310. Furthermore, Figure 1 shows a mobility management entity 200 which is connected to the two base station transceivers 300, 301 via an S1-interface, in line with the 3GPP specifications. Although not shown in Figure 1 it is assumed that base station transceiver 302 also has an S1-connection to the MME 200. Moreover, the Figure 1 shows a serving gateway (S-GW for abbreviation) 202, which serves a gateway for data transmission to other networks. In the illustrated embodiment it is assumed that the interfacing between the components follows the 3GPP specification and that protocol tunneling is carried out between the base station transceiver 300, which is also called donor eNodeB, and the mobile relay station transceiver 100, which is indicated by dotted arrows in Figure 1. Hence, the interface between two base station transceivers may also be referred to as "X2"-interface and the wireless interface between the mobile relay station transceiver 100 and the base station transceiver 300 may also be referred to as the "Un"-interface, where it is further assumed that the corresponding protocol contexts are established. In the embodiment depicted in Figure 1 protocol tunneling for the S1 and the X2 protocols is assumed.

In other words, the mobile relay station transceiver 100 receives the corresponding data packets from the base station transceiver 300 in a way that enables standard protocol termination at the mobile relay station transceiver 100, such that it can service the mobile transceivers 400, 401 like a regular eNB. The tunneling may comprise using a certain further protocol for the Un-interface that allows exchanging the corresponding X2 and S 1 data packets between the mobile relay station transceiver 100 and the base station transceiver 300 in a transparent way, i.e. in a way that does affect any other network entities.

From Figure 1 it can be seen that all UEs are "hidden" towards the network within the virtual tracking area 110. Especially in the case when many UEs are connected to a bus or tram or train a lot of tracking area updates can be avoided. Based on the concept that each mobile relay 100 also has a UE functionality this can be achieved with pointer functionality within the MME 200. Only the 'UE car', i.e. the mobile relay station transceiver 100, will send out a tracking area update. The terms tracking area update and location area update can be used synonymously.

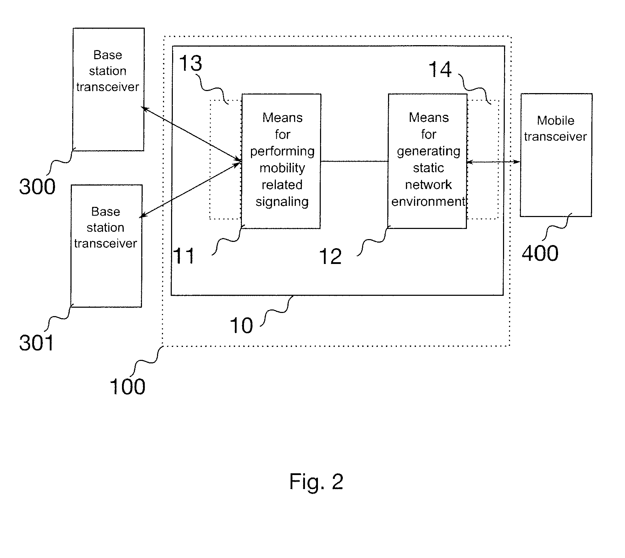

Figure 2 depicts a block diagram of an embodiment of an apparatus 10 for a mobile relay station transceiver 100. A plurality of base station transceivers 300 and 301 is shown, where the arrows indicate the interaction with the apparatus 10. Moreover, a mobile transceiver 400 is shown and the interaction with the mobile transceiver 400 is indicated by an arrow between it and the apparatus 10. The mobile transceiver 400 is located in the coverage area of the mobile relay station transceiver 100. It is assumed that the mobile transceiver 400 is associated with the mobile relay station transceiver 100 while being in an idle mode. The idle mode of the mobile transceiver 400 is also indicated in Figure 1.

The idle mode is a state in which data transmission is inactive, i.e. no data transmission is actively carried out between the mobile transceiver 400 and the relay station transceiver 100. The mobile relay station transceiver apparatus 10 is adapted for performing mobility related signaling towards the mobile communication system 500 communicating with the plurality of base station transceivers 300, 301. As shown in Figure 2, the apparatus 10 comprises means adapted for performing the mobility related signaling. Moreover, the apparatus may comprise means for generating a static network environment for the mobile transceiver 400 while the mobile transceiver 400 is associated to the mobile relay station transceiver 100. In such a (virtual) static network environment no network signaling due to the mobile station's 400 movement along with the mobile coverage area is required by the mobile station 400. Instead, such network signaling is only performed by the mobile relay station transceiver 100. This is in particularly beneficial when a plurality of mobile stations is associated to the mobile relay station transceiver 100 with its mobile coverage area.

In the embodiment, the first and the second base station transceivers 300, 302 are assumed to have adjacent coverage areas. As can be seen from the overview in Figure 1, the first base station transceiver 300 belongs to the first location area 310 and the second base station transceiver 302 belongs to the second location area 312. A location area is considered as an administrative group of one or more base station transceivers 300, 301, 302 to which a mobile transceiver 400 is registered when switched on, and in which a mobile transceiver 400 in idle mode is queried by the mobility management entity 200 when a first radio link for data communication with the mobile transceiver 400 is to be established.

In embodiments the apparatus 10 can further comprise first means for communicating 13 with the first and second base station transceivers 300, 302 and the mobility management entity 200 and second means for communicating 14 with the mobile transceiver 400. The optional first and second means for communicating 13, 14 are indicated by the dotted blocks in Figure 2 and can for example be realized as wireless interfaces. In the present embodiment the first means for communicating with the network may be implemented as said "Un"-interface, the second means for communicating with the mobile transceiver 400 may be implemented as the "Uu"-interface in line with the 3GPP specifications.

In other embodiments the first and second means for communicating 13, 14 can be implemented as different wireless interfaces, i.e. using different wireless access technologies. A mobile transceiver 400 registered with the virtual location area 110 may then be paged and communicated with using a different wireless technology than the mobile relay station transceiver 100 uses towards the mobile communication network. For example, the mobile relay station transceiver apparatus 10 may use the first means for communicating 13 with the base station transceivers 300, 302 corresponding to the above "Un" interface, while the second means for communicating 14 with the mobile transceiver 400 may correspond to a Wireless Local Area Network (WLAN) interface.

In this embodiment the apparatus 10 comprises means for registering 11, i.e. as an implementation of the means for performing 11, with the mobility management entity 200 for the first or the second location area 310, 312 and for changing the registration from the first location area 310 to the second location area 312 when the relay station transceiver 100 moves from the coverage area of the first base station transceiver 300 to the coverage area of the second base station transceiver 302 using the first means for communicating 13. Furthermore, the apparatus 10 comprises means for establishing 12, i.e. as an implementation of the means for generating 12, the virtual location area 110 for the mobile transceiver 400 to register with using the second means for communicating 14.

The means for registering 11 is further adapted for generating an indication for the mobility management entity 200 when the mobile transceiver 400 initially registers with the virtual location area 110. Therewith the MME knows that the UE 400 is located in the virtual location area 110. The indication comprises information on the virtual location area 110 of the mobile relay station transceiver 100 and information on an identification of the mobile transceiver 400. Therewith the MME 200 can associate the virtual location area 110 with the mobile relay station transceiver 100 and the virtual location area 110 with the mobile transceiver 400. The means for establishing 12 the virtual location area 110 is adapted to be registered with for a plurality of mobile transceivers 400, 401. In other words, a plurality of mobile transceiver in the car can register for the virtual location area 110. In other words, during the first attach of 'UE1_in_car' 400 towards the LTE network 500 the pointing towards 'UE car' 100 is configured. This is also indicated in Figure 1 by the table next to the MME. In the embodiment, a general "UE", e.g. mobile transceiver 402, is associated with a "location area". The "UE_car", i.e. the mobile relay station transceiver 100, is also associated with the regular location area, e.g. location areas 310, 312. However, "UE1_in_car" and "UE2_in_car", i.e. mobile transceivers 400, 401, are associated with "UE_car", which provides a tunnel to the virtual location area.

The means for registering 11 is further adapted for generating an indication for the mobility management entity 200 when none of the mobile transceivers 400, 401 registered for the virtual location area 110 has an active data transmission. The relay station transceiver apparatus 10 may thus provide an indication when no data transmissions are active, further indicating that it may itself be switched to idle mode.

As has already been described above, the apparatus 10 comprises first means for communicating 13 with the first and second base station transceivers 300, 301, 302 and second means for communicating 14 with the mobile transceiver 400. The apparatus 10 further comprises means for setting up 12, i.e. as implementation of the means for establishing 12, a radio link with the mobile transceiver 400 for active data transmission using the second means for communicating 14 and it comprises means for linking with the first or second base station transceiver 300, 301, 302 and for changing the linking from the first base station transceiver 300, 301 to the second base station transceiver 301, 302 when moving from the coverage area of the first base station transceiver 300, 301 to the coverage area of the second base station transceiver 301, 302 using the first means for communicating 13. The changes in the reference signs shall indicate that such a handover may be carried out between any two of the base station transceivers 300, 301, 302 .In other words, the apparatus 10 may switch the mobile transceivers back to active mode when an active data transmission is to be established. The apparatus 10 may further carry out any handover signaling towards the network.

Moreover, the apparatus 10 may comprise means for relaying information received from the first base station transceiver 300, 301 to the mobile transceiver 400 and from the mobile transceiver 400 to the first base station transceiver 300, 301 when linked with the first base station transceiver 300, 301. The means for relaying may relay information received from the second base station transceiver 301, 302 to the mobile transceiver 400 and from the mobile transceiver 400 to the second base station transceiver 301, 302, when linked with the second base station transceiver 301, 302. The apparatus further comprises means for controlling the second means for communicating 14 such that a change of the linking from the first base station transceiver 300, 301 to the second base station transceiver 301, 302 is transparent to the mobile transceiver 400. I.e. a mobile transceiver 400 may not be affected from a handover of the mobile relay station transceiver 100. Moreover, the apparatus may buffer data during handover and it may comprise means for storing data provided by the mobile transceiver 400 during the change of the linking from the first base station transceiver 300, 301 to the second base station transceiver 301, 302.

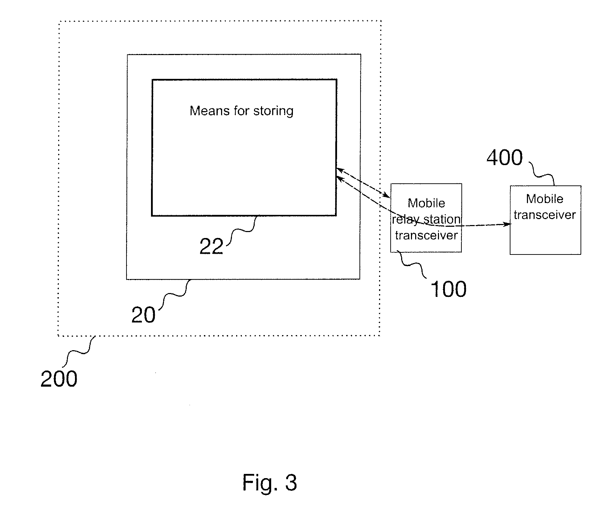

Figure 3 depicts a block diagram of an embodiment of an apparatus 20 for a mobility management entity 200 in a mobile communication system 500. Again, it is referred to Figure 1, which shows that the mobile communication system 500 comprises the plurality of base station transceivers 300, 301, 302, the mobile relay station transceiver 100 and the mobile transceiver 400. As has already been described the plurality of base station transceivers 300, 301, 302 is organized in a plurality of location areas 310, 312. The apparatus 20 comprises means for storing 22 information on a location area 310, 312, the mobile relay station transceiver 100 is registered with, for the mobile relay station transceiver 100. The means for storing 22 is further adapted for storing information on the registration with the mobile relay station transceiver 100 for the mobile transceiver 400. Furthermore, the apparatus 20 is further adapted for paging the mobile transceiver 400 by paging the mobile relay station transceiver 100 and subsequently paging the mobile transceiver 400, as it is indicated by the arrows in Figure 3. In other words, the apparatus 20 may first page the mobile relay station transceiver 100 and after a response was received, i.e. after the location of the mobile relay station transceiver 100 was determined and after the mobile relay station transceiver 100 has been switched to active mode, the mobile transceiver 400 can be paged within the virtual location area 110 of the mobile relay station transceiver 100.

In other words and referring to Figure 1, in the case a 'UE1_in_car' 400 is in idle mode and has to be paged for an incoming call, the MME 200 will detect that this UE1_in_car 400 is 'combined' with the 'UE car' 100. The 'UE car' 100 points to the tunnel towards the mobile relay 100 and to the virtual tracking area 110. The paging message will be sent to the mobile relay 100 and the mobile relay 100 will carry out the paging within the virtual tracking area 110.

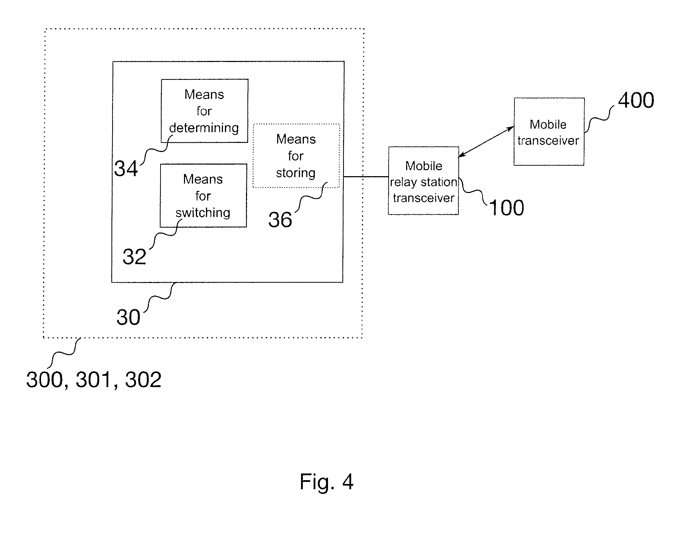

Figure 4 depicts a block diagram of an embodiment of an apparatus 30 for a base station transceiver 300, 301, 302. In the embodiment it is assumed that the mobile relay station transceiver 100 is associated with the base station transceiver 300, 301, 302. The base station transceiver apparatus 30 comprises means for switching 32 the mobile relay station transceiver between an active mode, in which a data transmission between the base station transceiver 300, 301, 302 and the mobile relay station transceiver 100 is active, and an idle mode, in which data transmission between the base station transceiver 300, 301, 302 and the mobile relay station transceiver 100 is inactive. Furthermore, the apparatus comprises means for determining 34 whether an active data transmission exists between the mobile relay station transceiver 100 and a mobile transceiver 400. The means for switching 32 is further adapted for switching the mobile relay station transceiver 100 into the idle mode when it is determined that no active data transmission exists between the mobile relay station transceiver 100 and a mobile transceiver 400.

Different embodiments are possible with respect to the determination whether the mobile relay station transceiver 100 still actively services a mobile transceiver 400. In some embodiments the apparatus 30 may monitor the signaling between the MME 200 and the mobile relay station transceiver 100, i.e. the means for determining 34 is adapted for determining the active transmission by monitoring signaling transmissions between the mobile relay station transceiver 100 and the mobility management entity 200 in the mobile communication system 500. In some embodiments the mobile relay station transceiver may provide an according signaling, i.e. the means for determining 34 is adapted for receiving an indication from the mobile relay station transceiver 100 when no active data transmission exists between the mobile relay station transceiver 100 and a mobile transceiver 400. In the case all UE 400, 401 served by the mobile relay station transceiver 100 are in idle mode, also the 'UE car' 100 might be switched to idle mode by the eNB2 300. This may require that eNB2 300 checks the data and signaling traffic of the tunnel towards the mobile relay 100, or the mobile relay 100 sends a message towards the eNB2 300 that all terminals 400, 401 (UEx_in_car) are in idle mode.

In the embodiment, base station transceiver apparatus 30 is also adapted for handling the buffering of payload and signaling data during a handover of the mobile relay station 100 among any of the base station transceivers 300, 301, 302. The apparatus 30 is adapted for communicating with a data gateway 202, which is also illustrated in Figure 1. The apparatus 30 is adapted for forwarding data received from the mobile relay station transceiver 100 to the data gateway 202 and for forwarding data received from the data gateway 202 for the mobile transceiver 400 to the mobile relay station transceiver 100. The base station transceiver apparatus 30 further comprises means for storing 36 data received from the data gateway 202 for the mobile transceiver 400 during the change of an association of the relay station transceiver 100 from the base station transceiver 300, 301, 302, to another base station transceiver 301, 302, 300, where the change in the order of the references sign shall show that the change in association or the handover may between any two of the base station transceivers 300, 301, 302. The base station transceiver apparatus 30 is further adapted for receiving an indication on an accepted change of the association from the other base station transceiver 301, 302, 300. In other words, the other base station transceiver 301, 302, 300 may provide an acknowledgment message. The base station transceiver apparatus 30 is further adapted for forwarding the stored data to the other base station transceiver 301, 302, 300 after the indication on the accepted change of the association was received.

The embodiment may buffer signaling from the mobility management entity 200 in a similar way. The apparatus 30 is further adapted for communicating with the mobility management entity 200 and for forwarding signaling data received from the mobility management entity 200 for the mobile transceiver 400 to the mobile relay station transceiver 100. The apparatus 30 is further adapted for forwarding signaling data received from the mobile relay station transceiver 100 to the mobility management entity 200. The base station transceiver apparatus 30 is further adapted for storing signaling data received from the mobility management entity 200 for the mobile transceiver 400 during the change of an association of the mobile relay station transceiver 100 from the base station transceiver 300, 301, 302 to another base station transceiver 301, 302, 300. The base station transceiver apparatus 30 is further adapted for receiving an indication on an accepted change of the association from the other base station transceiver 301, 302, 300, and the base station transceiver apparatus 30 is further adapted for forwarding the stored signaling data to the other base station transceiver 301, 302, 300 after the indication on the accepted change of the association was received.

Furthermore, the embodiment may handle a handover of another mobile relay station transceiver, which changes its association from the other base station transceiver 301, 302, 300 to the base station transceiver 300, 301, 302. The apparatus is adapted for receiving an indication on a change of an association of another mobile relay station transceiver from the other base station transceiver 301, 302, 300 to the base station transceiver 300, 301, 302. The base station transceiver 300, 301, 302 is adapted for generating an indication on an accepted change of the association and for forwarding information on the indication to the other base station transceiver 301, 302, 300. Moreover, the apparatus 30 is adapted for generating an indication on a new association for a mobility management entity 200 and for forwarding information on the indication on the new association to the mobility management entity 200.

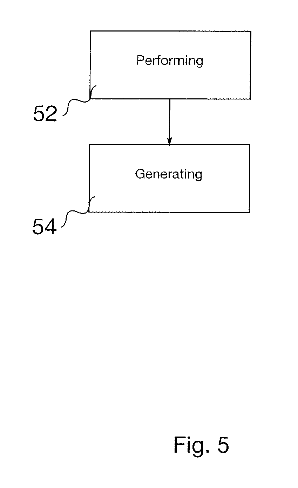

Figure 5 shows a flow chart of an embodiment of a method for a mobile relay station transceiver 100 in a mobile communication system 500. The mobile communication system 500 comprises a plurality of base station transceivers 300, 301, 302 and a mobile transceiver 400. The mobile transceiver 400 is located in the coverage area of the mobile relay station transceiver 100 and associated with the mobile relay station transceiver 100, while being in an idle mode. The method comprises a step of performing 52 mobility related signaling towards the mobile communication system 500 communicating with the plurality of base station transceivers 300, 301, 302. The method comprises a further step of generating 54 a static network environment for the mobile transceiver 400 while the mobile transceiver 400 is associated to the mobile relay station transceiver 100.

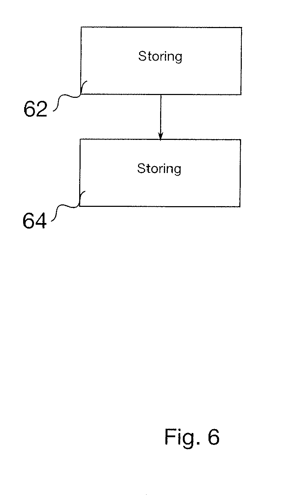

Figure 6 shows a flow chart of an embodiment of a method for a mobility management entity 200 in the mobile communication system 500. The method comprises a step of storing 62 information on a location area the mobile relay station transceiver 100 is registered with for the mobile relay station transceiver 100 and a step of storing 64 information on the registration with the mobile relay station transceiver 100 for the mobile transceiver 400.

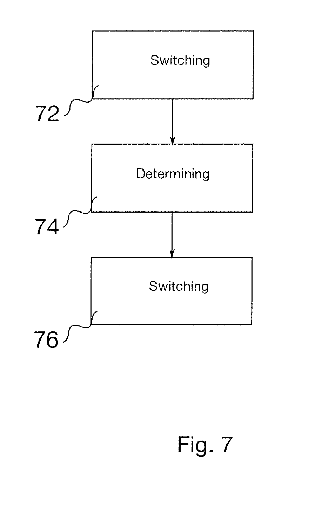

Figure 7 shows a flow chart of an embodiment of a method for a base station transceiver 300, 301, 302 in the mobile communication system 500. The mobile communication system 500 comprises the mobile relay station transceiver 100 which is associated with the base station transceiver 300, 301, 302. The method comprises a step of switching 72 the mobile relay station transceiver 100 between an active mode, in which a data transmission between the base station transceiver 300, 301, 302 and the mobile relay station transceiver 100 is active, and an idle mode, in which data transmission between the base station transceiver 300, 301, 302 and the mobile relay station transceiver 100 is inactive. The method further comprises a step of determining 74 whether an active data transmission exists between the mobile relay station transceiver 100 and one or more mobile transceivers 400 and a step of switching 76 the mobile relay station transceiver 100 into the idle mode when it is determined that no active data transmission exists between the mobile relay station transceiver 100 and a mobile transceiver 400.

Moreover, embodiments may provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for performing", "means for generating", "first means for communicating", "second means for communicating", "means for registering", "means for establishing", "means for setting up", "means for linking", "means for relaying", "means for controlling", "means for storing", "means for switching", "means for determining", etc., may be provided through the use of dedicated hardware, such as "a performer", "an generator", "a first or second communicator", "a registerer", "an establisher", "an up-setter", "a linker", "a relayer", "a controller", "a storer", "a switch", "a determiner", "a processor", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile relay station transceiver (100) in a mobile communication system (500), the mobile relay station transceiver (100) having a coverage area, the mobile communication system (500) comprising a plurality of base station transceivers (300;301;302) and a mobile transceiver (400), the mobile transceiver (400) being located in the coverage area of the mobile relay station transceiver (100) and associated with the mobile relay station transceiver (100) while being in an idle mode, the idle mode being a state in which data transmission is inactive, the apparatus (10) being adapted for performing mobility related signaling towards the mobile communication system (500) communicating with the plurality of base station transceivers (300;301;302), and for generating a static network environment for the mobile transceiver (400) while the mobile transceiver (400) is associated to the mobile relay station transceiver (100).

2. The apparatus (10) of claim 1, wherein the mobile communication system (500) comprises a first base station transceiver (300), a second base station transceiver (302), and a mobility management entity (200), the first and the second base station transceivers (300;302) having adjacent coverage areas, the first base station transceiver (300) belonging to a first location area (310) and the second base station transceiver (302) belonging to a second location area (312), a location area being an administrative group of one or more base station transceivers (300;301;302) to which a mobile transceiver (400) is registered when switched on, and in which a mobile transceiver (400) in idle mode is queried by the mobility management entity (200) when a first radio link for data communication with the mobile transceiver (400) is to be established, the apparatus (10) comprising
first means for communicating (13) with the first and second base station transceivers (300;302) and the mobility management entity (200);
means for registering (11) with the mobility management entity (200) for the first or the second location area (310;312) and for changing the registration from the first location area (310) to the second location area (312) when the relay station transceiver (100) moves from the coverage area of the first base station transceiver (300) to the coverage area of the second base station transceiver (302) using the first means for communicating;
second means for communicating (14) with the mobile transceiver (400); and means for establishing (12) a virtual location area (110) for the mobile transceiver (400) to register with using the second means for communicating.

3. The apparatus (10) of claim 2, wherein the means for registering (11) is further adapted for generating an indication for the mobility management entity (200) when a mobile transceiver (400) initially registers with the virtual location area (110) and/or wherein the indication comprises information on the virtual location area (110) of the mobile relay station transceiver (100) and information on an identification of the mobile transceiver (400).

4. The apparatus (10) of claim 2, wherein the means (12) for establishing the virtual location area (110) is adapted to be registered with for a plurality of mobile transceivers (400;401) and/or wherein the means for registering (11) is further adapted for generating an indication for the mobility management entity (200) when none of the mobile transceivers (400;401) registered for the virtual location area (110) has an active data transmission.

5. The apparatus (10) of claim 1, further comprising
first means for communicating (13) with the first and second base station transceivers (300;301;302);
second means for communicating (14) with the mobile transceiver (400); means for setting up (12) a radio link with the mobile transceiver (400) for active data transmission using the second means for communicating (14);
means for linking (13) with the first or second base station transceiver (300;301;302) and for changing the linking from the first base station transceiver (300;301) to the second base station transceiver (301;302) when moving from the coverage area of the first base station transceiver (300;301) to the coverage area of the second base station transceiver (301;302) using the first means for communicating (13);
means for relaying information received from the first base station transceiver (300;301) to the mobile transceiver (400) and from the mobile transceiver (400) to the first base station transceiver (300;301) when linked with the first base station transceiver (300;301), and for relaying information received from the second base station transceiver (301;302) to the mobile transceiver (400) and from the mobile transceiver (400) to the second base station transceiver (301;302) when linked with the second base station transceiver (301;302); and means for controlling the second means for communicating (14) such that a change of the linking from the first base station transceiver (300;301) to the second base station transceiver (301;302) is transparent to the mobile transceiver (400) and/or further comprising means for storing data provided by the mobile transceiver (400) during the change of the linking from the first base station transceiver (300;301) to the second base station transceiver (301;302).

6. An apparatus (20) for a mobility management entity (200) in a mobile communication system (500), the mobile communication system (500) comprising a plurality of base station transceivers (300;301;302), a mobile relay station transceiver (100) and a mobile transceiver (400), the plurality of base station transceivers (300;301;302) being organized in a plurality of location areas (310;312), a location area being an administrative group of one or more base station transceivers (300;301;302) to which a mobile transceiver (400) is registered when switched on and in which a mobile transceiver (400) is queried by the mobility management entity (200) of the mobile communication system (500) when a first radio link for data transmission to the mobile transceiver (400) is to be established, the apparatus (20) comprising means for storing (22) information on a location area (310; 312) the mobile relay station transceiver (100) is registered with for the mobile relay station transceiver (100), and for storing information on the registration with the mobile relay station transceiver (100) for the mobile transceiver (400).

7. The apparatus (20) of claim 6, being further adapted for paging a mobile transceiver (400) by paging the mobile relay station transceiver (100) and subsequently paging the mobile transceiver (400).

8. An apparatus (30) for a base station transceiver (300;301;302) in a mobile communication system (500), the mobile communication system (500) comprising a mobile relay station transceiver (100) being associated with the base station transceiver (300;301;302), the base station transceiver apparatus (30) comprising
means for switching (32) the mobile relay station transceiver between an active mode, in which a data transmission between the base station transceiver (300;301;302) and the mobile relay station transceiver (100) is active, and an idle mode, in which data transmission between the base station transceiver (300;301;302) and the mobile relay station transceiver (100) is inactive; and means for determining (34) whether an active data transmission exists between the mobile relay station transceiver (100) and one or more mobile transceivers (400);
wherein the means for switching (32) is further adapted for switching the mobile relay station transceiver (100) into the idle mode when it is determined that no active data transmission exists between the mobile relay station transceiver (100) and a mobile transceiver (400).

9. The apparatus (30) of claim 8, wherein the means for determining (34) is adapted for determining the active transmission by monitoring signaling transmissions between the mobile relay station transceiver (100) and a mobility management entity (200) in the mobile communication system (500), and/or the means for determining (34) is adapted for receiving an indication from the mobile relay station transceiver (100) when no active data transmission exists between the mobile relay station transceiver (100) and a mobile transceiver (400).

10. The apparatus (30) of claim 8, further adapted for communicating with a data gateway (202), for forwarding data received from the mobile relay station transceiver (100) to the data gateway (202), and for forwarding data received from the data gateway (202) for the mobile transceiver (400) to the mobile relay station transceiver (100), the base station transceiver apparatus (30) further comprising
means for storing (36) data received from the data gateway (202) for the mobile transceiver (400) during the change of an association of the relay station transceiver (100) from the base station transceiver (300;301;302) to another base station transceiver (301;302;300), wherein the base station transceiver apparatus (30) is further adapted for receiving an indication on an accepted change of the association from the other base station transceiver (301;302;300), and wherein the base station transceiver apparatus (30) being further adapted for forwarding the stored data to the other base station transceiver (301;302;300) after the indication on the accepted change of the association was received; and/or
wherein the apparatus (30) is further adapted for communicating with a mobility management entity (200), for forwarding signaling data received from the mobility management entity (200) for the mobile transceiver (400) to the mobile relay station transceiver (100), and for forwarding signaling data received from the mobile relay station transceiver (100) to the mobility management entity (200), the base station transceiver apparatus (30) being further adapted for storing signaling data received from the mobility management entity (200) for the mobile transceiver (400) during the change of an association of the mobile relay station transceiver (100) from the base station transceiver (300;301;302) to another base station transceiver (301;302;300), wherein the base station transceiver apparatus (30) is further adapted for receiving an indication on an accepted change of the association from the other base station transceiver (301;302;300), and wherein the base station transceiver apparatus (30) being further adapted for forwarding the stored signaling data to the other base station transceiver (301;302;300) after the indication on the accepted change of the association was received; and/or
wherein the apparatus (30) is further adapted for receiving an indication on a change of an association of another mobile relay station transceiver from another base station transceiver (301;302;300) to the base station transceiver (300;301;302), the base station transceiver (300;301;302) further being adapted for generating an indication on an accepted change of the association and for forwarding information on the indication to the other base station transceiver (301;302;300).

11. The apparatus (30) of claim 10, further adapted for generating an indication on a new association for a mobility management entity (200) and for forwarding information on the indication on the new association to the mobility management entity (200).

12. A method for a mobile relay station transceiver (100) in a mobile communication system (500), the mobile relay station transceiver (100) having a coverage area, the mobile communication system (500) comprising a plurality of base station transceivers (300;301;302) and a mobile transceiver (400), the mobile transceiver (400) being located in the coverage area of the mobile relay station transceiver (100) and associated with the mobile relay station transceiver (100) while being in an idle mode, the idle mode being a state in which data transmission is inactive, the method comprising
performing (52) mobility related signaling towards the mobile communication system (500) communicating with the plurality of base station transceivers (300;301;302); and
generating (54) a static network environment for the mobile transceiver (400) while the mobile transceiver (400) is associated to the mobile relay station transceiver (100).

13. A method for a mobility management entity (200) in a mobile communication system (500), the mobile communication system (500) comprising a plurality of base station transceivers (300;301;302), a mobile relay station transceiver (100) and a mobile transceiver (400), the plurality of base station transceivers (300;301;302) being organized in a plurality of location areas (310;312), a location area being an administrative group of one or more base station transceivers (300;301;302) to which a mobile transceiver (400) is registered when switched on and in which a mobile transceiver (400) is queried by the mobility management entity (200) of the mobile communication system (500) when a first radio link for data transmission to the mobile transceiver (400) is to be established, the method comprising
storing (62) information on a location area the mobile relay station transceiver (100) is registered with for the mobile relay station transceiver (100); and storing (64) information on the registration with the mobile relay station transceiver (100) for the mobile transceiver (400).

14. A method for a base station transceiver (300;301;302) in a mobile communication system (500), the mobile communication system (500) comprising a mobile relay station transceiver (100) being associated with the base station transceiver (300;301;302), the method comprising
switching (72) the mobile relay station transceiver (100) between an active mode, in which a data transmission between the base station transceiver (300;301;302) and the mobile relay station transceiver (100) is active, and an idle mode, in which data transmission between the base station transceiver (300;301;302) and the mobile relay station transceiver (100) is inactive;
determining (74) whether an active data transmission exists between the mobile relay station transceiver (100) and one or more mobile transceivers (400);
switching (76) the mobile relay station transceiver (100) into the idle mode when it is determined that no active data transmission exists between the mobile relay station transceiver (100) and a mobile transceiver (400).

15. A computer program having a program code for performing one of the methods of claims 12, 13 or 14, when the computer program is executed on a computer or processor.

## Amended claims

### Amended claims in accordance with Rule 137(2) EPC.

**1.** An apparatus (10) for a mobile relay station transceiver (100) in a mobile communication system (500), the mobile relay station transceiver (100) having a coverage area, the mobile communication system (500) comprising a plurality of base station transceivers (300;301;302) and a mobile transceiver (400), the mobile transceiver (400) being located in the coverage area of the mobile relay station transceiver (100) and associated with the mobile relay station transceiver (100) while being in an idle mode, the idle mode being a state in which data transmission is inactive, the apparatus (10) being adapted for performing mobility related signaling towards the mobile communication system (500) communicating with the plurality of base station transceivers (300;301;302), and for generating a static network environment in terms of a virtual location area (110) for the mobile transceiver (400) while the mobile transceiver (400) is associated to the mobile relay station transceiver (100).

**2.** The apparatus (10) of claim 1, wherein the mobile communication system (500) comprises a first base station transceiver (300), a second base station transceiver (302), and a mobility management entity (200), the first and the second base station transceivers (300;302) having adjacent coverage areas, the first base station transceiver (300) belonging to a first location area (310) and the second base station transceiver (302) belonging to a second location area (312), a location area being an administrative group of one or more base station transceivers (300;301;302) to which a mobile transceiver (400) is registered when switched on, and in which a mobile transceiver (400) in idle mode is queried by the mobility management entity (200) when a first radio link for data communication with the mobile transceiver (400) is to be established, the apparatus (10) comprising
first means for communicating (13) with the first and second base station transceivers (300;302) and the mobility management entity (200);
means for registering (11) with the mobility management entity (200) for the first or the second location area (310;312) and for changing the registration from the first location area (310) to the second location area (312) when the relay station transceiver (100) moves from the coverage area of the first base station transceiver (300) to the coverage area of the second base station transceiver (302) using the first means for communicating;
second means for communicating (14) with the mobile transceiver (400); and
means for establishing (12) a virtual location area (110) for the mobile transceiver (400) to register with using the second means for communicating.

**3.** The apparatus (10) of claim 2, wherein the means for registering (11) is further adapted for generating an indication for the mobility management entity (200) when a mobile transceiver (400) initially registers with the virtual location area (110) and/or wherein the indication comprises information on the virtual location area (110) of the mobile relay station transceiver (100) and information on an identification of the mobile transceiver (400).

**4.** The apparatus (10) of claim 2, wherein the means (12) for establishing the virtual location area (110) is adapted to be registered with for a plurality of mobile transceivers (400;401) and/or wherein the means for registering (11) is further adapted for generating an indication for the mobility management entity (200) when none of the mobile transceivers (400;401) registered for the virtual location area (110) has an active data transmission.

**5.** The apparatus (10) of claim 1, further comprising
first means for communicating (13) with the first and second base station transceivers (300;301;302);
second means for communicating (14) with the mobile transceiver (400);
means for setting up (12) a radio link with the mobile transceiver (400) for active data transmission using the second means for communicating (14);
means for linking (13) with the first or second base station transceiver (300;301;302) and for changing the linking from the first base station transceiver (300;301) to the second base station transceiver (301;302) when moving from the coverage area of the first base station transceiver (300;301) to the coverage area of the second base station transceiver (301;302) using the first means for communicating (13);
means for relaying information received from the first base station transceiver (300;301) to the mobile transceiver (400) and from the mobile transceiver (400) to the first base station transceiver (300;301) when linked with the first base station transceiver (300;301), and for relaying information received from the second base station transceiver (301;302) to the mobile transceiver (400) and from the mobile transceiver (400) to the second base station transceiver (301;302) when linked with the second base station transceiver (301;302); and
means for controlling the second means for communicating (14) such that a change of the linking from the first base station transceiver (300;301) to the second base station transceiver (301;302) is transparent to the mobile transceiver (400) and/or further comprising means for storing data provided by the mobile transceiver (400) during the change of the linking from the first base station transceiver (300;301) to the second base station transceiver (301;302).

**6.** An apparatus (20) for a mobility management entity (200) in a mobile communication system (500), the mobile communication system (500) comprising a plurality of base station transceivers (300;301;302), a mobile relay station transceiver (100) and a mobile transceiver (400), the plurality of base station transceivers (300;301;302) being organized in a plurality of location areas (310;312), a location area being an administrative group of one or more base station transceivers (300;301;302) to which a mobile transceiver (400) is registered when switched on and in which a mobile transceiver (400) is queried by the mobility management entity (200) of the mobile communication system (500) when a first radio link for data transmission to the mobile transceiver (400) is to be established, the apparatus (20) comprising means for storing (22) information on a location area (310; 312) the mobile relay station transceiver (100) is registered with for the mobile relay station transceiver (100), and for storing information on the registration with the mobile relay station transceiver (100) for the mobile transceiver (400) in terms of a virtual location area (110).

**7.** The apparatus (20) of claim 6, being further adapted for paging a mobile transceiver (400) by paging the mobile relay station transceiver (100) and subsequently paging the mobile transceiver (400).

**8.** A method for a mobile relay station transceiver (100) in a mobile communication system (500), the mobile relay station transceiver (100) having a coverage area, the mobile communication system (500) comprising a plurality of base station transceivers (300;301;302) and a mobile transceiver (400), the mobile transceiver (400) being located in the coverage area of the mobile relay station transceiver (100) and associated with the mobile relay station transceiver (100) while being in an idle mode, the idle mode being a state in which data transmission is inactive, the method comprising
performing (52) mobility related signaling towards the mobile communication system (500) communicating with the plurality of base station transceivers (300;301;302); and
generating (54) a static network environment in terms of a virtual location area (110) for the mobile transceiver (400) while the mobile transceiver (400) is associated to the mobile relay station transceiver (100).

**9.** A method for a mobility management entity (200) in a mobile communication system (500), the mobile communication system (500) comprising a plurality of base station transceivers (300;301;302), a mobile relay station transceiver (100) and a mobile transceiver (400), the plurality of base station transceivers (300;301;302) being organized in a plurality of location areas (310;312), a location area being an administrative group of one or more base station transceivers (300;301;302) to which a mobile transceiver (400) is registered when switched on and in which a mobile transceiver (400) is queried by the mobility management entity (200) of the mobile communication system (500) when a first radio link for data transmission to the mobile transceiver (400) is to be established, the method comprising
storing (62) information on a location area the mobile relay station transceiver (100) is registered with for the mobile relay station transceiver (100); and storing (64) information on the registration with the mobile relay station transceiver (100) for the mobile transceiver (400) in terms of a virtual location area (110).

**10.** A computer program having a program code for performing one of the methods of claims 8 or 9, when the computer program is executed on a computer or processor.
